(19) Europäisches Patentamt
European Patent Office
Office européen des brevets

(11) **EP 3 701 433 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **18789057.9**

(22) Anmeldetag: **15.10.2018**

(51) Internationale Patentklassifikation (IPC):
**G06N 3/047** (2023.01)     **G06N 3/0495** (2023.01)
**G06N 3/09** (2023.01)

(52) Gemeinsame Patentklassifikation (CPC):
**G06N 3/0495; G06N 3/047; G06N 3/09**

(86) Internationale Anmeldenummer:
**PCT/EP2018/077995**

(87) Internationale Veröffentlichungsnummer:
**WO 2019/081241 (02.05.2019 Gazette 2019/18)**

(54) **VERFAHREN, VORRICHTUNG UND COMPUTERPROGRAMM ZUR ERSTELLUNG EINES TIEFEN NEURONALEN NETZES**

METHOD, DEVICE AND COMPUTER PROGRAM FOR DEVELOPING A DEEP NEURAL NETWORK

PROCÉDÉ, DISPOSITIF ET PROGRAMME INFORMATIQUE POUR CRÉER UN RÉSEAU NEURONAL PROFOND

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2017   DE 102017218851**

(43) Veröffentlichungstag der Anmeldung:
**02.09.2020   Patentblatt 2020/36**

(73) Patentinhaber: **Robert Bosch GmbH**
**70442 Stuttgart (DE)**

(72) Erfinder:
- **KOEHLER, Jan Mathias**
  **70199 Stuttgart (DE)**
- **GENEWEIN, Tim**
  **70174 Stuttgart (DE)**
- **ACHTERHOLD, Jan**
  **71272 Renningen (DE)**

(56) Entgegenhaltungen:
- **Alex Graves: "Practical variational inference for neural networks", Advances in neural information processing systems 24 : 25th Annual Conference on Neural Information Processing Systems 2011 ; December 12 - 15, 2011, Granada, Spain, 12. Dezember 2011 (2011-12-12), Seiten 2348-2356, XP055500609, Red Hook, NY ISBN: 978-1-61839-599-3 Gefunden im Internet: URL:https://papers.nips.cc/paper/4329-prac tical-variational-inference-for-neural-net works.pdf [gefunden am 2018-08-17]**
- **MIGUELA CARREIRA-PERPINAN ET AL: "Model compression as constrained optimization, with application to neural nets. Part II: quantization", ARXIV.ORG, CORNELL UNIVERSITY LIBRARY, 201 OLIN LIBRARY CORNELL UNIVERSITY ITHACA, NY 14853, 13. Juli 2017 (2017-07-13), XP080776639,**
- **Darryl D Lin ET AL: "Fixed Point Quantization of Deep Convolutional Networks", , 19. November 2015 (2015-11-19), Seiten 1-10, XP055284812, Gefunden im Internet: URL:https://arxiv.org/pdf/1511.06393v3.pdf [gefunden am 2016-06-30]**

**Beschreibung**

Technisches Gebiet

Die Erfindung betrifft ein Verfahren zur Erstellung eines tiefen neuronalen Netzes, ein Computerprogramm und eine Vorrichtung, die jeweils eingerichtet sind, das Verfahren auszuführen.

Stand der Technik

Die US 5,119,469 offenbart ein neuronales Netzwerksystem mit einer Vielzahl von Synapsen und einer adaptiven Gewichtsschaltung zum Einstellen der Gewichte jeder Synapse. Das neuronale Netzwerksystem wird sukzessive mit einer Serie von Trainingsdaten durch systematisches Einstellen der Gewichte zur Mustererkennung angelernt.

MIGUELA CARREIRA-PERPINAN ET AL, "Model compression as constrained optimization, with application to neural nets. Part II: quantization", ARXIV.ORG, CORNELL UNIVERSITY LIBRARY, 201 OLIN LIBRARY CORNELL UNIVERSITY ITHACA, NY 14853, (20170713), offenbart einen Ansatz, der auf einer Modellkompression als eingeschränkte Optimierung basiert. Daraus ergibt sich ein iterativer "Lern-Kompressions"-Algorithmus, der abwechselnd ein Netz mit kontinuierlichen Gewichten trainiert und die Gewichte quantisiert (oder binarisiert/ternarisiert).

Vorteile der Erfindung

Das Verfahren mit den Merkmalen des unabhängigen Anspruchs 1 hat demgegenüber den Vorteil, dass die Gewichte der Verbindungen des tiefen neuronalen Netzes derart ermittelt werden, dass diese einen vorgebbaren diskreten Wert aus einer Liste mit diskreten Werten annehmen. Durch die diskreten Werte der Gewichte des erstellten tiefen neuronalen Netzes kann eine Reduktion des benötigten Speicherplatzes zum Abspeichern des tiefen neuronalen Netzes erzielt werden. Denn die Gewichte können, beispielsweise anhand eines Indexes des diskreten Werts aus der Liste abgespeichert werden. Dadurch muss nicht mehr jeder Wert eines jeden Gewichtes einzeln mit hoher Genauigkeit abgespeichert werden, sondern es ist ausreichend, wenn jeweils nur ein Index des Wertes des Gewichts und die vorgebbare Liste mit diskreten Werten und deren Indices abgespeichert werden. Dies führt dazu, dass das erstellte tiefe neuronale Netz einen geringeren Speicherplatzbedarf aufweist. Des Weiteren wird eine Komprimierung der Darstellung des tiefen neuronalen Netzes mittels dieses Verfahrens erzielt. Denn die Werte der Gewichte des erstellten tiefen neuronalen Netzes sind nicht mehr kontinuierlich, sondern die Gewichte können nur eine gewisse Anzahl an vorgebbaren diskrete Werte annehmen. Dies führt dazu, dass das tiefe neuronale Netz durch eine geringere Anzahl an unterschiedlichen Gewichten charakterisiert wird und eine komprimierte Darstellung erzielt werden kann. Ein weiterer Vorteil des Verfahrens ist, dass durch die diskreten Werte der Gewichte die Anzahl der Rechenoperationen, insbesondere Multiplikationen, die durchgeführt werden müssen, um eine Ausgangsgröße des tiefen neuronalen Netzes zu ermitteln, unter Ausnutzung des Distributivgesetzes reduziert werden können. Da die Werte der Gewichte nur vorgebbare unterschiedliche diskrete Werte annehmen können, können die Gewichte, die den gleichen diskreten Wert aufweisen, mittels des Distributivgesetzes ausgeklammert werden, wodurch die Anzahl der Multiplikation und der Rechenaufwand zur Ermittlung des Ergebnisses signifikant reduziert werden können.

Offenbarung der Erfindung

In einem ersten Aspekt betrifft die Erfindung ein computerimplementiertes Verfahren zur Erstellung eines tiefen neuronalen Netzes nach Anspruch 1. Die vorgebbare Liste diskreter Werte kann eine Liste mit einer Mehrzahl von vorgebbaren diskreten Werten sein, wobei jedem Eintrag der Liste ein Index zugeordnet ist. Unter einem Abbilden der Werte auf jeweils einen diskreten Wert wird verstanden, dass einem jeden Gewicht abhängig von dessen Wert und den vorgebbaren diskreten Werten der vorgebbaren Liste diskreter Werte ein Wert aus der vorgebbaren Liste diskreter Werte zugeordnet wird. Wenn Beispielsweise der Wert eines der Gewichte innerhalb eines vorgebbaren Toleranzbereichs um einen der zumindest zwei vorgebbaren diskreten Werten liegt, wird als Wert dieses Gewichtes derjenige vorgebbare diskrete Wert, innerhalb dessen Toleranzbereichs der Wert des Gewichtes liegt, zugeordnet, insbesondere als Wert zugehörig zu diesem Gewicht gespeichert. Die Toleranzbereiche der jeweiligen zumindest zwei vorgebbaren diskreten Werte überschneiden sich vorzugsweise nicht. Andernfalls wäre optional ein Auswahlmechanismus vorzusehen, der aufgrund der Toleranzbereiche denjenigen zulässigen diskreten Wert auswählt, der dem Gewicht zugeordnet werden kann.

Unter einem Objekt kann hierbei ein in der Trainingseingangsgröße codiertes Merkmal verstanden werden, welches von dem tiefen neuronalen Netz dekodiert und genutzt werden kann, um das Objekt in der Trainingseingangsgröße zu detektieren.

Die Bestrafungsgröße charakterisiert eine Abweichung einer a-Posteriori-Verteilungsfunktion eines der Gewichte von einer a-Priori-Verteilungsfunktion der vorgebbaren diskreten Werte dieses Gewichtes. Dabei kann die a-Priori-Verteilungsfunktion eine angenommene Verteilungsfunktion der vorgebbaren diskreten Werte eines Gewichtes oder von allen Gewichten sein bevor die Trainingsgröße gesehen wurde. Eine Verteilungsfunktion kann beispielsweise die Auftrittswahrscheinlichkeitsverteilung der jeweiligen möglichen Werte eines der Gewichte charakterisieren. Die a-Posteriori-Verteilungsfunktion gibt dabei die Verteilung der Werte eines der Gewichte an und kann, insbesondere initial, beliebig gewählt werden, da diese während des Anlernens des tiefen neuronalen Netzes angepasst wird. Die genaue Form der a-Posteriori-Verteilungsfunktion ergibt sich nach dem Anlernen unter Verwendung der Trainingsgröße.

Besonders vorteilhaft ist, wenn die a-Priori-Verteilungsfunktion für eine vorgebbare Untermenge der Gewichte des neuronalen Netzes abhängig von einer Topologie eines mit dieser vorgebbaren Untermenge assoziierten Teils des tiefen neuronalen Netzes gewählt wird. Der assoziierte Teil des tiefen neuronalen Netzes sind diejenigen Schichten und Verbindungen, denen die Gewichte aus der Untermenge zugeordnet sind. Dies weist den Vorteil auf, dass, wenn mehrere Gewichte zu einem Filter zusammengefasst werden können, diesen Gewichten die gleiche a-Priori-Verteilungsfunktion zugeordnet werden kann. Aus bereits bekannten erstellten tiefen neuronalen Netzen kann eine Information über die Verteilung der Gewichtwerte wiederverwendet werden. Daraus können z.B. a-Priori-Verteilungsfunktionen abgeleitet werden, die den Filtern zugeordnet werden, wodurch beispielsweise Filter einfacher und schneller gelernt werden können und das Anlernen gezielter durchgeführt werden kann. Ein weiterer Vorteil ist, dass durch die Verwendung derselben a-Priori-Verteilungsfunktion für die Untermenge, wirksamer redundante Filter bzw. Gewichte entfernt werden können, da diese anhand der gleichen a-Priori-Verteilungsfunktion einen ähnlichen diskreten Wert nach dem Anlernen aufweisen können.

Weiterhin ist es besonders vorteilhaft, wenn die Bestrafungsfunktion eine gewichtete Aufsummierung von ermittelten Abweichungen charakterisiert. Es wird jeweils eine Abweichung der a-Posteriori-Verteilungsfunktion eines der Gewichte zu der a-Priori-Verteilungsfunktion an jeweils einer Position, die jeweils einem der vorgebbaren diskreten Werte zugeordnet ist, ermittelt und diese Abweichung wird anhand einer Gewichtungsfunktion, die diesem jeweiligen vorgebbaren diskreten Wert zugeordnet ist, gewichtet.

Zugeordnet kann insbesondere bedeuten, dass die Gewichtungsfunktion um diesen jeweiligen vorgebbaren diskreten Wert zentriert ist. Beispielsweise kann die Gewichtungsfunktion, insbesondere eine Gaußglockenkurve, symmetrisch um den jeweiligen vorgebbaren diskreten Wert zentriert sein. Damit kann die Abweichung der a-Priori-Verteilungsfunktion zu der a-Posteriori-Verteilungsfunktion stückweise ermittelt werden und anschießend die ermittelten Abweichungen geeignet gewichtet und überlagert werden, wodurch die Abweichung der zwei Verteilungsfunktionen zuverlässig angenähert wird.

Vorteilhaft ist, wenn die ermittelten Abweichungen jeweils eine ermittelte Abweichung der a-Posteriori-Verteilungsfunktion zu einer Log-Uniform-Verteilungsfunktion ist und diese ermittelte Abweichung an jeweils eine der Positionen einer der zumindest zwei vorgebbaren diskreten Werten verschobenen wird und anhand der Gewichtungsfunktion, die diesem jeweiligen vorgebbaren diskreten Wert zugeordnet ist, gewichtet wird.

Ebenso vorteilhaft ist, wenn eine der ermittelten Abweichungen anhand von einem vorgebbaren Wert, insbesondere dem Wert "1", abzüglich der Summe der jeweiligen Gewichtungsfunktionen gewichtet wird. Dies hat den Vorteil, dass die ermittelten Abweichungen auch in großer Entfernung zu den ermittelten Abweichungen der anderen vorgebbaren diskreten Werten, eine zuverlässige Approximierung durchgeführt werden kann.

Weiterhin ist es vorteilhaft, wenn eine Abweichung der a-Posteriori-Verteilungsfunktion von der a-Priori-Verteilungsfunktion anhand von einer Approximation einer Kullback-Leibler Divergenz zwischen der a-Posteriori-Verteilungsfunktion und der a-Priori-Verteilungsfunktion ermittelt wird.

In einer weiteren Ausführungsform des Verfahrens, kann beim Anlernen des tiefen neuronalen Netzes eine der a-Posteriori-Verteilungsfunktionen abhängig von der Kostenfunktion angepasst werden, wobei das Gewicht, welches durch die angepasste a-Posteriori-Verteilungsfunktion charakterisiert wird, abhängig von der angepassten a-Posteriori-Verteilungsfunktion angepasst wird.

Ebenso kann in einer weiteren Ausführungsform des Verfahrens zumindest einer der zumindest zwei vorgebbaren diskreten Werte der Wert "0" sein. Vorteilhaft ist, wenn die Gewichte, die nach dem Anlernen des tiefen neuronalen Netz auf den diskreten Wert "0" abgebildet wurden, entfernt werden. Dies hat den Vorteil, dass nach dem Anlernen des tiefen neuronalen Netzes diese Gewichte ohne Beeinträchtigung der Leistungsfähigkeit des tiefen neuronalen Netzes entfernt werden können und damit eine zusätzliche Komprimierung des tiefen neuronalen Netzes, aber auch eine zusätzliche Reduktion des Rechenaufwands und des Speicherplatzbedarfs erreicht werden kann.

Vorteilhaft ist, wenn die a-Posteriori-Verteilungsfunktionen anhand jeweils einer Normalverteilung charakterisiert ist.

Weiterhin ist es vorteilhaft, wenn die Abfolge der Schritte des Ermittelns der die Kostenfunktion charakterisierenden Größe und des Anlernens des tiefen neuronalen Netzes mehrfach wiederholt wird, bis ein Abbruchkriterium erfüllt ist. Das Abbruchkriterium kann zum Beispiel eine vorgebbare Anzahl an Wiederholungen der Abfolge der Schritte sein. Optional kann als Abbruchkriterium definiert sein, dass die die Kostenfunktion charakterisierende Größe kleiner als eine vorgebbare Größe sein muss und/oder die Gewichte jeweils einen Wert der zumindest zwei vorgebbaren diskreten Werten angenommen haben bzw. sich innerhalb eines vorgebbaren Bereichs um einen der zumindest zwei vorgebbaren diskreten Werte befinden.

Vorteilhaft ist auch, wenn eine jede Schicht jeweils einen Schwellenwert aufweist, wobei die Bestrafungsgröße zusätzlich eine Abweichung eines Schwellenwertes von wenigstens weiteren zumindest zwei vorgebbaren diskreten Werten charakterisiert, wobei beim Anlernen des tiefen neuronalen Netzes, einer der Schwellenwerte abhängig von der die Kostenfunktion charakterisierenden Größe angepasst wird. Unter einem Schwellenwert wird ein Wert verstanden, welcher eine Übertragungsfunktion der Neuronen dieser Schicht charakterisiert. Die Übertragungsfunktion ermittelt abhängig von einer Eingangsgröße und einer vorgebbaren Funktion eine Ausgangsgröße. Dabei können die oben genannten unterschiedlichen Ausführungsformen des Verfahrens auch für die Anpassung der Schwellenwerte der Schichten zu diskreten Schwellenwerten beim Erstellen des tiefen neuronalen Netzes verwendet werden. Hierfür muss nur das Wort "Gewicht" aller oben genannten Verfahrensschritte mit dem Wort "Schwellenwert" ausgetauscht werden.

In einer vorteilhaften Weiterentwicklung des Verfahrens, wird nach dem Anlernen des tiefen neuronalen Netzes, eine Eingangsgröße des tiefen neuronalen Netzes ermittelt. Ein Objekt wird dann mittels des angelernten tiefen neuronalen Netzes abhängig von der ermittelten Eingangsgröße detektiert und vorteilhafterweise wird eine zumindest teilautonome Maschine anschließend abhängig von dem detektierten Objekt angesteuert. Eine zumindest teilautonome Maschine kann zum Beispiel ein Roboter, insbesondere ein Fahrzeug, sein. Denkbar ist auch, dass das Verfahren verwendet werden kann, um tiefe neuronale Netze zu erstellen, die auf einer mobilen Recheneinheit betrieben werden können. Eine mobile Recheneinheit, insbesondere Mobiltelefone oder Kameras, sind durch einen limitierten Speicherplatz, begrenzte Rechenleistung und eingeschränkter Energieversorgung, gekennzeichnet. Das tiefe neuronale Netz kann neben der Objektdetektion alternativ zum Beispiel zur Klassifikation, semantische Segmentierung oder Regression erstellt, angelernt und/oder verwendet werden.

In einem weiteren Aspekt betrifft die Erfindung ein Computerprogramm, welches Befehle umfasst, die beim Ausführen auf einem Computer bewirken, dass eines der oben genannten Verfahren ausgeführt wird und ferner ein maschinenlesbares Speicherelement, auf welchem das Computerprogramm gespeichert ist.

In einem weiteren Aspekt betrifft die Erfindung eine Vorrichtung, die eingerichtet ist, jeden Schritt eines der Verfahren auszuführen.

Ausführungsbeispiele der vorliegenden Erfindung sind in den beiliegenden Zeichnungen dargestellt und in der nachfolgenden Beschreibung näher erläutert. Dabei zeigen:

## Kurze Beschreibung der Zeichnungen

Fig. 1     eine schematische Darstellung eines Systems mit einem tiefen neuronalen Netz zur Detektion eines Objektes;

Fig. 2A     eine schematische Darstellung einer a-Priori-Verteilungsfunktion, die eine Mehrzahl von vorgebbaren diskreten Werte charakterisiert;

Fig. 2B     eine schematische Darstellung einer a-Posteriori-Verteilungsfunktion eines Gewichts;

Fig. 3     eine schematische Darstellung einer Ausführungsform des erfindungsgemäßen Verfahrens;

Fig. 4     eine schematische Darstellung der Verteilung und zeitlichen Entwicklung der Werte der Gewichte beim Anlernen eines beispielhaft verwendeten tiefen neuronalen Netzes mit zwei vollvermaschten Schichten und zwei Faltungsschichten.

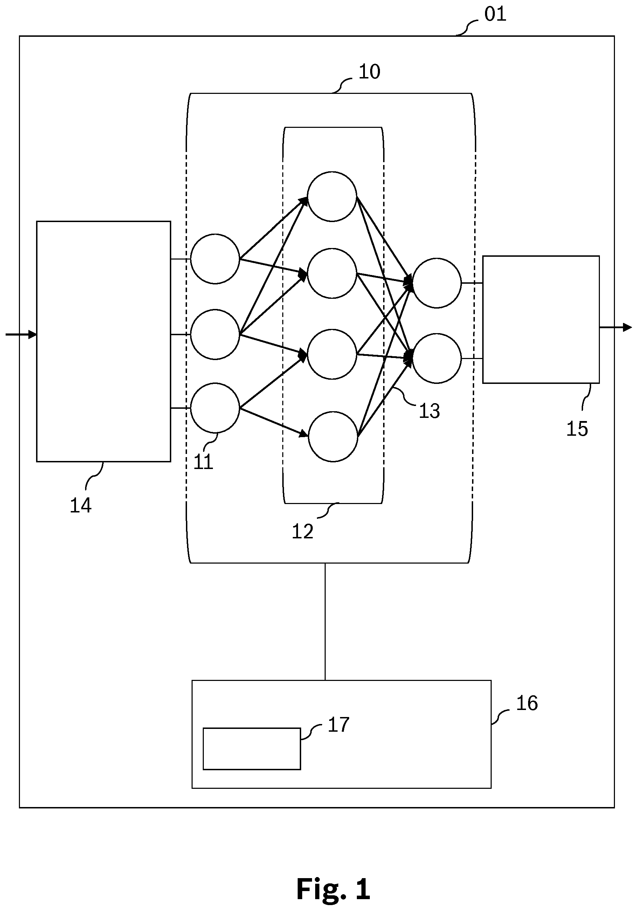

Figur 1 zeigt eine schematische Darstellung einer Ausführungsform eines Systems (01) zur Detektion eines Objektes und zur Ansteuerung einer zumindest teilautonomen Maschine abhängig vom detektieren Objekt. Das System (01) umfasst eine Mehrzahl von in Reihe miteinander verbundenen Komponenten (14,10,15). Die Komponente (14) ist eine Erfassungseinheit, welche eine Eingangsgröße für das tiefe neuronale Netz (10) erfasst und diese dem tiefen neuronalen Netz (10) bereitstellt. Der Ausgang des tiefen neuronalen Netzes (10) ist mit einer Steuereinheit (15) verbunden. Die Steuereinheit (15) ist dafür eingerichtet, abhängig von der Ausgangsgröße des tiefen neuronalen Netzes (10) eine Steuergröße zu ermitteln, um damit beispielsweise einen Roboter, insbesondere ein Fahrzeug, zu steuern. Des Weiteren umfasst das System (01) eine Recheneinheit (16), welche ein Speicherelement (17) aufweist. Die Recheneinheit (16) kann mit dem tiefen neuronalen Netz (10) verbunden sein.

Das tiefe neuronale Netz (10) besteht aus einer Mehrzahl von Schichten (12), die jeweils eine Mehrzahl von Neuronen (11) umfassen. Die Neuronen (11) besitzen jeweils wenigstens einen Eingang und einen Ausgang. Das Neuron ermittelt eine Ausgangsgröße abhängig von einer Übertragungsfunktion, insbesondere einer parametrisierbaren ReLu-Funktion oder einer Sigmoidfunktion, und der Eingangsgröße des Neuron (11). Die Neuronen einer vorgebbaren Schicht (12) sind mittels Verbindungen (13) mit den Neuronen einer nachfolgenden Schicht verbunden. Beispielsweise können die Ausgänge jedes der Neuronen der vorgebbaren Schicht (12) mit allen Eingängen der Neuronen (11) der unmittelbar nachfolgenden Schicht verbunden sein, wie dies in Figur 1 im rechten Teil des tiefen neuronalen Netz (10) schematisch dargestellt ist und im Folgenden als vollvermaschte Schicht (englisch: "fully connected") bezeichnet wird. Denkbar ist aber auch, dass nicht jeder Ausgang eines Neurons einer Schicht mit jedem Eingang eines Neurons einer der nachfolgenden Schicht verbunden ist, wie dies im linken Teil des tiefen neuronalen Netzes (10) dargestellt ist. Ebenso ist denkbar, dass der Ausgang eines Neurons mit einem Eingang eines Neurons einer nicht unmittelbar nachfolgenden Schicht (z.B. eine "shortcut connection/skip connection") oder mit einer vorhergehenden Schicht verbunden ist. Es sei angemerkt, dass dies nicht in Figur 1 dargestellt ist.

Jeder Verbindung (13) ist ein Gewicht zugewiesen. Mittels dieses Gewichtes, wird die Ausgangsgröße eines Neurons gewichtet und als Eingangsgröße für das nachfolgende Neuron bereitgestellt. Bevorzugt hat jedes Gewicht einen Wert zwischen einschließlich -1 und 1 und die Ausgangsgröße des Neurons wird durch eine Multiplikation mit diesem Wert gewichtet und kann dann als Eingangsgröße des mit der Verbindung (13) verbundenen Neurons verwendet werden.

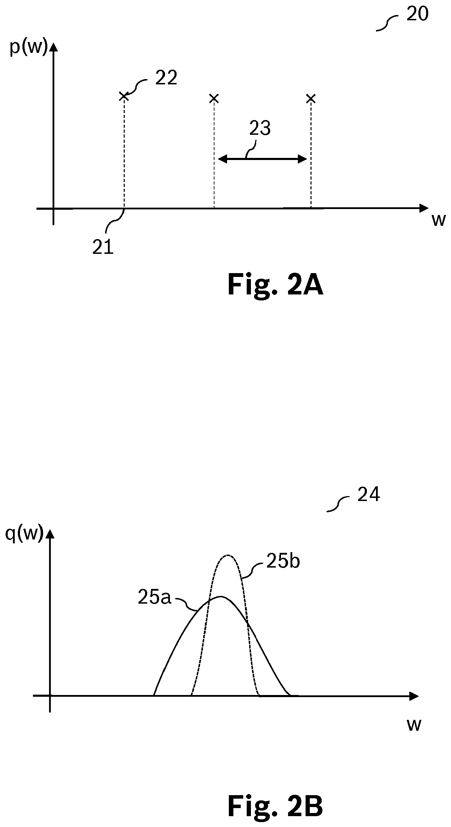

Figur 2A zeigt eine schematische Darstellung einer möglichen a-Priori-Verteilungsfunktion (20), welche die Auftrittswahrscheinlichkeit p(w) der vorgebbaren diskreten Werte w (21) beschreibt. Die a-Priori-Verteilungsfunktion (20) ist eine Verteilungsfunktion, welche eine getroffene Annahme über die Verteilung der Gewichtswerte beschreibt. Die Annahme kann beispielhaft sein, dass die Werte w eines Gewichts nur diskret und gleichverteilt sind. Wie in Figur 2A gezeigt, wird hier angenommen, dass das Gewicht nur 3 unterschiedliche diskrete Werte (21) annehmen kann und diesen jeweils eine Auftrittswahrscheinlichkeit (22) zugeordnet ist. In einer alternativen Ausführungsform können auch zwei oder mehr als drei unterschiedliche diskrete Werte (21) durch die a-Priori-Verteilungsfunktion (20) beschrieben werden. Vorteilhaft ist, wenn ein vorgebbarer diskreter Wert (21) gleich "0" ist, welches ein einfaches Entfernen redundanter Gewichte ermöglicht. Ein Gewicht, welches den Wert "0" annimmt, ist dabei redundant, da die Information der Eingangsgröße durch eine Multiplikation mit "0" verloren geht. Eine Stufenbreite (23), d.h. eine Distanz zwischen zwei vorgebbaren diskreten Werten, kann beliebig groß gewählt werden. Die Stufenbreite (23) ist aber bevorzugt proportional zu einer Anzahl der verwendeten Bits zur Darstellung der vorgebbaren diskreten Werte in der Recheneinheit (16).

Die a-Priori-Verteilungsfunktion (20) kann im Folgenden dazu verwendet werden, um das tiefe neuronale Netz (10) anzulernen, sodass die Werte der Gewichte, insbesondere ausschließlich, einen der vorgebbaren diskreten Werte annehmen.

Im Ausführungsbeispiel wird die a-Priori-Verteilungsfunktion (20) beispielhaft wie folgt gewählt:

$$(\text{Gl. 1}) \qquad\qquad p(w) \approx \sum_{k=1}^{n} \frac{1/n}{|w - c_k|}$$

wobei n einer Anzahl an vorgebbaren diskreten Werten entspricht, w ist der Wert des Gewichtes und $c_k$ jeweils der k-te vorgebbare diskrete Wert.

Figur 2B zeigt eine schematische Darstellung einer a-Posteriori-Verteilungsfunktion (24). Die a-Posteriori-Verteilungsfunktion (24) ist vorzugsweise eine Normalverteilung und kann zu Beginn des Verfahrens, insbesondere zufällig, initialisiert werden. Die a-Posteriori-Verteilungsfunktion (24) beschreibt die Auftrittswahrscheinlichkeit q(w) eines Wertes w eines Gewichtes. Während des Anlernens des tiefen neuronalen Netzes (10) kann die a-Posteriori-Verteilungsfunktion (24) angepasst werden, sodass sich diese einem geeigneten Wert w des Gewichtes annähert für die verwendete Trainingsgröße. Ein geeigneter Wert w eines Gewichtes ist dadurch charakterisiert, dass das tiefe neuronale Netz (10) anhand des geeigneten Wertes w des Gewichtes die vorgegebene Aufgabe, insbesondere einer Detektion eines Objektes in der Eingangsgröße des tiefen neuronalen Netzes (10), zuverlässig löst. Figur 2B zeigt eine beispielhaft initialisierte a-Posteriori-Verteilungsfunktion (25a), welche während des Anlernens des tiefen neuronalen Netzes (10) angepasst wird. Diese angepasste a-Posteriori-Verteilungsfunktion (25b) beschreibt dann die Auftrittswahrscheinlichkeit q(w) des Wertes w des Gewichts, nachdem eine Trainingsgröße zum Anlernen des tiefen neuronalen Netzes (10) verwendet wurde.

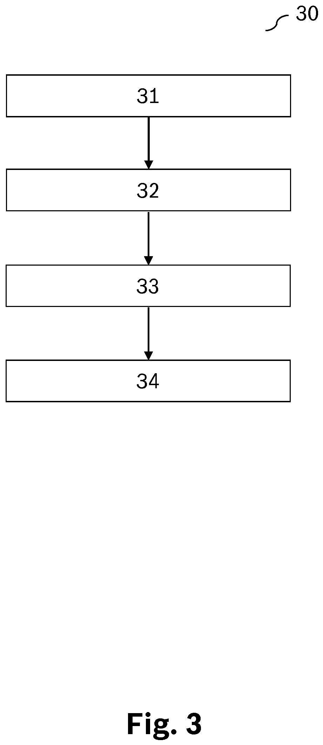

Figur 3 zeigt eine schematische Darstellung eines Ablaufdiagramms einer Ausführungsform des Verfahrens (30) zur Erstellung eines tiefen neuronalen Netzes, bei welchem die Gewichte nach Erstellen des tiefen neuronalen Netzes einen Wert einer vorgebbaren Liste vorgebbaren diskreten Werten aufweisen.

Das Verfahren (30) beginnt mit Schritt 31. In Schritt 31 wird dem tiefen neuronalen Netz (10) eine Trainingseingangsgröße bereitgestellt. Nachdem die Trainingsgröße bereitgestellt wurde, kann optional die a-Posteriori-Verteilungsfunktion (24) der Gewichte, insbesondere zufällig, initialisiert werden. Ebenso kann in Schritt 31 die a-Priori-Verteilungsfunktion (20) aufgestellt werden. Bevorzugt wird jedem Gewicht des tiefen neuronalen Netzes (10) jeweils eine a-Priori-Verteilungsfunktion (20) und eine a-Posteriori-Verteilungsfunktion (24) zugeordnet. Das Aufstellen der a-Priori-Verteilungsfunktion (20) kann beispielhaft durchgeführt werden, in dem aus bereits angelernten tiefen neuronalen Netzen beispielhaft für ähnliche Anwendungsgebiete die Verteilung der Werte der Gewichte erfasst werden, um daraus die a-Priori-Verteilungsfunktion (20) abzuleiten. Das Ableiten der a-Priori-Verteilungsfunktion (20) kann z.B. mittels einer Clusteranalyse der Gewichtswerte und einer Betrachtung der Häufigkeit des Auftretens der unterschiedlichen Gewichtswerte durchgeführt werden. Die ermittelten Clusterzentren nach der Clusteranalyse können als vorgebbare diskrete Werte genutzt werden und diesen kann jeweils eine Auftrittswahrscheinlichkeit anhand der Betrachtung der Häufigkeit des Auftretens der jeweiligen Werte zugeordnet werden, was bspw. durch die a-Priori-Verteilungsfunktion charakterisiert werden kann. Alternativ kann die a-Priori-Verteilungsfunktion (20) anhand einer Liste mit vorgebbaren diskreten Werten (21) und deren, insbesondere angenommenen oder abgeschätzten, Auftrittswahrscheinlichkeit p(w) aufgestellt werden. Alternativ kann die a-Priori-Verteilungsfunktion (20) beispielsweise wie oben in (Gl. 1) gezeigt, gewählt werden oder als eine Log-Uniform-Verteilungsfunktion gewählt werden. Die a-Priori-Verteilungsfunktion (20) kann entweder für jedes Gewicht des tiefen neuronalen Netzes (10) verwendet werden, oder es können mehrere unterschiedliche a-Priori-Verteilungsfunktion (20) für jeweils eine ausgewählte Untermenge der Gewichte des tiefen neuronalen Netzes (10) verwendet werden.

Nachdem Schritt 31 abgeschlossen wurde, folgt Schritt 32. In Schritt 32 wird in Abhängigkeit der Gewichte und der ermittelten Ausgangsgröße des tiefen neuronalen Netzes (10) und einer vorgebbaren Soll-Ausgangsgröße des tiefen neuronalen Netzes (10) eine erste Größe einer Kostenfunktion ermittelt.

Da die Gewichte in diesem Ausführungsbeispiel des Verfahrens anhand von Verteilungsfunktionen beschrieben sind, kann zum Beispiel die erste Größe mit einer Kreuzentropie-Fehlerfunktion $L_{D,1}$ ermittelt werden:

$$(\text{Gl. 2}) \qquad\qquad L_{D,1} = \sum_D \mathbb{E}_{q(w)}[\log(p(y|x,w)]$$

wobei D die Trainingsgröße umfasst, $\mathbb{E}_{q(w)}[\cdot]$ den Erwartungswertoperator angewandt auf q(w) darstellt und der bedingte Wahrscheinlichkeit p(y|x,w), dass mit den Werten w der Gewichte, die Eingangsdaten x der Trainingsgröße D eine richtige Soll-Ausgangsgröße y ermittelt wurde.

Zusätzlich wird zu der ersten Größe der Kostenfunktion in Schritt 32 eine Bestrafungsgröße ermittelt. Die Bestrafungsgröße charakterisiert dabei eine Abweichung eines Wertes einer der Gewichte von wenigstens einem der vorgebbaren diskreten Werte. Da die Gewichte in diesem Ausführungsbeispiel anhand von Verteilungsfunktion beschrieben werden, kann die Bestrafungsgröße vorzugsweise mittels einer Kullback-Leibler (KL) Divergenz ermittelt werden. Diese kann beispielsweise mit folgender Formel dargestellt werden:

$$(\text{Gl. 3}) \qquad\qquad L_{D,KL} = -DL(q(w)||p(w))$$

wobei DL(q(w)∥p(w)) die KL Divergenz zwischen der a-Posteriori- Verteilungsfunktion q(w) und der a-Priori-Verteilungsfunktion q(w) ist.

Denkbar ist auch, dass die Bestrafungsgröße durch eine andere mathematische Operation, wie z.B. durch ein mathematisches Distanzmaß (wie u.a. eine Euklidische Distanz) eine Abweichung der Werte der Gewichte zu vorgebbaren diskreten Werten bestimmt wird und/oder mehrere, vornehmlich unterschiedliche, Bestrafungsgrößen ermittelt werden.

Abhängig von der Wahl der a-Priori-Verteilungsfunktion (20), besitzt die Bestrafungsgröße keine analytisch geschlossene Lösung, diese kann aber approximiert werden.

Wenn die a-Priori-Verteilungsfunktion (20) die Struktur nach (Gl. 1) aufweist und die Abweichung zwischen den beiden Verteilungsfunktionen ermittelt werden soll, kann z.B. die KL Divergenz geeignet approximiert werden, um die Abweichung zu ermitteln. Die Approximation der KL Divergenz nach (Gl. 3) mit der a-Posteriori-Verteilungsfunktion p(w) nach (Gl. 1) kann mit den nachfolgenden Schritten durchgeführt werden.

Zuerst kann eine Abweichung der a-Posteriori-Verteilungsfunktion (24) zu einer Log-Uniform-Verteilungsfunktion ermittelt werden, beispielsweise mit einer KL-Divergenz zwischen diesen zwei Verteilungsfunktionen. Die Log-Uniform-Verteilungsfunktion kann verwendet werden, da zur Abweichung der Log-Uniform-Verteilungsfunktion zu der a-Posteriori-Verteilungsfunktion (24) Verfahren in der Literatur bekannt sind, wie z.B. ein Monte-Carlo-Sampling. Anschließend kann die ermittelte Abweichung an die Position der jeweiligen diskreten Werte verschoben werden. Diese verschobenen Abweichungen stellen dabei jeweils eine stückweise ermittelte Abweichung der gesamten Abweichung der a-Priori-Verteilungsfunktion (20) zu der a-Posteriori-Verteilungsfunktion (24) dar. Danach wird jede verschobene Abweichung mittels einer Gewichtungsfunktion, insbesondere einer Gaußglockenfunktion, die um die Position des vorgebbaren diskreten Werts zentriert ist, gewichtet. Nach der Gewichtung mit der jeweiligen Gewichtungsfunktion der einzelnen Abweichungen, werden diese nach einer vorgebbaren Gewichtung gewichtet aufsummiert. Bevorzugt wird für die vorgebbare Gewichtung der Erwartungswert der a-Posteriori-Verteilungsfunktion (24) gewählt. Diese gewichtete Summation der einzelnen Abweichungen entspricht einer approximierten KL Divergenz der a-Priori-Verteilungsfunktion (20) und der a-Posteriori-Verteilungsfunktion (24) nach (Gl. 3).

Um die Approximation der KL Divergenz mit einer höheren Genauigkeit durchzuführen, kann zum Beispiel eine der Gewichtungsfunktion einer ermittelten KL Divergenz anderweitig gewählt werden. Bevorzugt hat diese Gewichtungsfunktion die Struktur, dass von einem vorgebbaren Wert, insbesondere "1", die Summe der verwendeten Gewichtungsfunktion abgezogen wird.

Nachdem die KL Divergenz ermittelt wurde, wird eine Summation der ersten Größe nach (Gl. 2) und der Bestrafungsgröße nach (Gl. 3) durchgeführt. Diese Summation stellt dann eine die Kostenfunktion charakterisierende Größe dar. Denkbar ist aber auch, dass die erste Größe nach (Gl. 2) und die Bestrafungsgröße nach (Gl. 3) durch andere mathematische Operationen miteinander verknüpft werden können. Wenn mehrere Bestrafungsgrößen ermittelt wurden, können diese ebenfalls in der die Kostenfunktion charakterisierende Größe berücksichtig werden.

Wenn Schritt 32 mit der Ermittlung der die Kostenfunktion charakterisierenden Größe beendet wurde, folgt Schritt 33. In Schritt 33 wird das tiefe neuronale Netz (10) angelernt. Beim Anlernen des tiefen neuronalen Netzes (10) werden die Werte der Gewichte ermittelt, sodass das tiefe neuronale Netz (10) beispielhaft Objekte in der Eingangsgröße des tiefen neuronalen Netzes (10) detektieren kann. Dabei werden, abhängig von der die Kostenfunktion charakterisierenden Größe, die Werte der Gewichte angepasst, sodass das tiefe neuronale Netz (10) Objekte detektieren kann. Bevorzugt wird mit einem Optimierungsverfahren, insbesondere einem Gradientenabstiegsverfahren, eine Änderungsgröße der Gewichte ermittelt, sodass nach Berücksichtigung der Änderungsgröße bei zumindest einer Mehrzahl der Gewichte, die die Kostenfunktion charakterisierende Größe minimiert wird. Denkbar ist auch, dass die a-Posteriori-Verteilungsfunktion abhängig von der die Kostenfunktion charakterisierenden Größe angepasst wird und die Werte der Gewichte abhängig von der angepassten a-Posteriori-Verteilungsfunktion (24) angepasst werden, insbesondere durch Verwenden des Erwartungswertes der a-Posteriori-Verteilungsfunktion (24) als angepassten Wert des Gewichtes. Wenn die a-Posteriori-Verteilungsfunktion (24) eine Normalverteilung ist, kann abhängig von der ermittelten Änderungsgröße, der Erwartungswert und die Standardabweichung der Normalverteilung angepasst werden. Durch Anpassung des Erwartungswertes und der Standardabweichung der Normalverteilung, kann diese nach Verwendung der Trainingsgröße zum Anlernen des tiefen neuronalen Netzes (10) die Auftrittswahrscheinlichkeiten geeigneter Werte dieses Gewichts beschreiben.

Nach Schritt 33 wird Schritt 34 eingeleitet. In Schritt 34 werden die Werte der Gewichte abgespeichert. Wenn der Wert eines der Gewichte einen Wert ähnlich zu einem vorgebbaren diskreten Wert aus der Liste diskreter Werte aufweist, wird der diskrete Wert aus der Liste diskreter Werte als Wert dieses Gewichts abgespeichert. Unter ähnlich wird verstanden, dass, wenn der Wert eines der Gewichte näher zu einem von zwei vorgebbaren diskreten Werten liegt, der Wert dieses Gewichtes ähnlich zu dem näher liegenden diskreten Wert ist. Wenn der Wert eines der Gewichte nur einen vorgebbaren diskreten Wert als nächstliegenden Wert aufweist, kann dieser ähnlich zu diesem vorgebbaren diskreten Wert sein.

Der diskrete Wert des Gewichtes wird in Form eines Indexes des diskreten Wertes gespeichert, wobei jedem vorgebbaren diskreten Wert aus der Liste diskreter Werte ein Index zugeordnet ist. Dadurch kann die Speicherung des Wertes dieses Gewichtes durch die Abspeicherung des Indexes durchgeführt werden. Damit muss nur die Liste mit diskreten Werten mit einer hohen Genauigkeit abgespeichert werden, während die Werte der Gewichte in Form eines Indexes mit geringen Speicheraufwand abgespeichert werden können.

In einem weiteren Ausführungsbeispiel des Verfahrens (30) ist denkbar, dass nach Beendigung des Schrittes 34 ein nachfolgender Schritt eingeleitet wird. In diesem nachfolgenden Schritt kann mittels der Erfassungseinheit (14) eine Eingangsgröße dem tiefen neuronalen Netz (10) bereitgestellt werden. Anschließend wird in diesem Schritt mittels des tiefen neuronalen Netzes (10) in Abhängigkeit der bereitgestellten Eingangsgrößen und den Gewichten eine Ausgangsgröße ermittelt. Diese Ausgangsgröße kann von der Steuerungseinheit (15) verwendet werden, um eine Steuerungsgröße zu ermitteln. Mit dieser Steuerungsgröße kann zum Beispiel ein Roboter, insbesondere ein Fahrzeug, angesteuert werden.

Nachdem das Verfahren (30) mit dem Schritt 34 abgeschlossen wurde, kann in einem weiteren Ausführungsbeispiel das Verfahren (30) zyklisch wieder mit einem der Schritte 31,32 oder Schritt 33 eingeleitet werden. Alternativ kann auch die Abfolge der Schritte 31,32,33 zyklisch durchgeführt werden, bis ein vorgebbares Abbruchkriterium erfüllt ist. Anschließend kann Schritt 34 ausgeführt werden.

In einer weiteren alternativen Ausführungsform des Verfahrens (30) kann alternativ die Initialisierung der a-Posteriori-Verteilungsfunktion (24) auf Basis eines bereits erstellten tiefen neuronalen Netzes durchgeführt werden. Beispielsweise kann die Verteilung der Werte der Gewichte des bereits erstellten tiefen neuronalen Netz verwendet werden, um daraus zumindest eine geeignete a-Posteriori-Verteilungsfunktion eines der Gewichte abzuleiten. Dies hat den vorteilhaften Effekt, dass beim, insbesondere erneuten, Anlernen des, insbesondere bereits erstellten, tiefen neuronalen Netzes mit dieser a-Posteriori-Verteilungsfunktion, nach Durchführung der oben genannten Schritte des Verfahrens (30) ein komprimiertes tiefes neuronales Netz vorliegen kann.

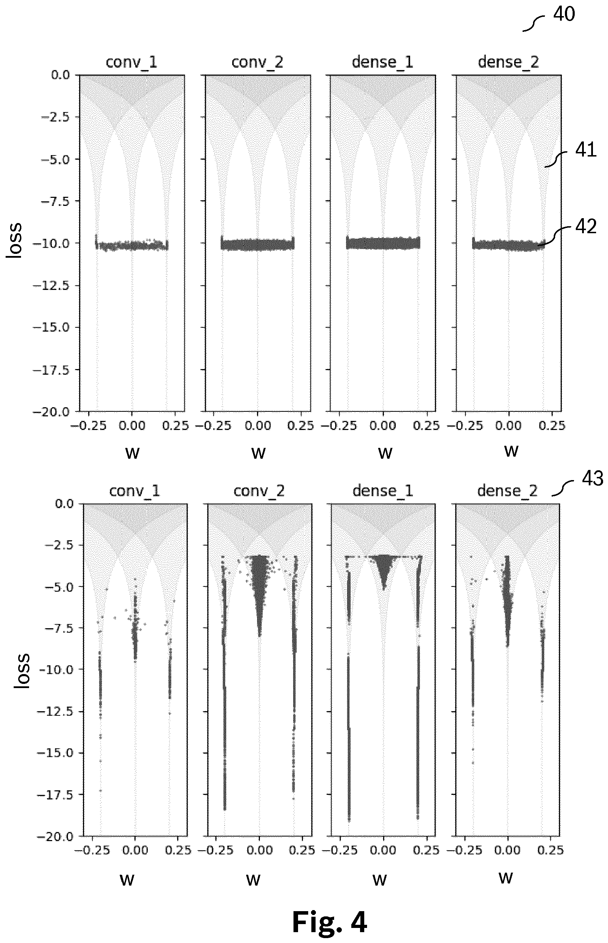

Figur 4 zeigt eine schematische Darstellung einer Verteilung und einer zeitlichen Entwicklung der Werte aller Gewichte beim Verwenden des Verfahrens des Ausführungsbeispiels zur Erstellung eines tiefen neuronalen Netzes mit vier Schichten. Zwei der Schichte sind vollvermaschte Schichten (dense_1,dense_2) und die restlichen Schichten sind Faltungsschichten (conv_1,conv_2). Die oberen vier Diagramme (40) zeigen dabei jeweils auf der x-Achse den Wert w der Gewichte der jeweiligen Schicht und auf der y-Achse ist die Bestrafungsgröße, in Fig.4 als "loss" bezeichnet, eingetragen. Der "loss" gibt hierbei einen Wert der Bestrafungsgröße abhängig von dem Wert w des Gewichtes an. Für jeden der drei vorgebbaren diskreten Werte (-0.2,0,0.2) ist jeweils in grau der Verlauf einer stückweise ermittelten und mit einer Gewichtungsfunktion gewichteten KL Divergenz (41) nach Schritt 32 dargestellt. Je weiter der Wert des Gewichtes von einem vorgebbaren diskreten Wert (-0,2,0,0,2) entfernt ist, desto größer wird der Wert der Bestrafungsgröße. Ebenso sind in den Diagrammen (40,43) durch die gewichtete Überlagerung der verschobenen KL Divergenzen (41) in grau ein möglicher Verlauf der

Bestrafungsgröße entlang des Wertes w der Gewichte eingezeichnet. Die einzelnen Werte der Gewichte sind jeweils durch Punkte (42) in die oberen vier Diagramme (40) eingetragen. Da diese Diagramme nach der Initialisierung des tiefen neuronalen Netzes (10) aufgenommen wurden und dieses zufällig initialisiert wurde, sind die Werte der Gewichte zufällig verteilt. Nachdem das Verfahren ausgeführt wurde, sind die unteren vier Diagramme (43) aufgenommen worden. Wie in Figur 4 dargestellt, zeigen die unteren vier Diagramme (43), dass die Werte der Gewichte die vorgebbaren diskreten Werte (-0,2,0,0,2) annehmen.

## Patentansprüche

1. Computerimplementiertes Verfahren (30) zur Erstellung eines tiefen neuronalen Netzes (10),

   wobei das tiefe neuronale Netz (10) eine Mehrzahl von Schichten (12) und Verbindungen (13) mit Gewichten aufweist, und die Gewichte im erstellten tiefen neuronalen Netz nur vorgebbare diskrete Werte aus einer vorgebbaren Liste diskreter Werte annehmen können, umfassend die Schritte:

   - Bereitstellen (31) zumindest einer Trainingseingangsgröße für das tiefe neuronale Netz (10);
   - Ermitteln (32) einer eine Kostenfunktion charakterisierenden Größe, wobei die die Kostenfunktion charakterisierende Größe eine erste Größe umfasst, die eine Abweichung einer abhängig von der bereitgestellten Trainingseingangsgröße ermittelten Ausgangsgröße des tiefen neuronalen Netzes zu einer vorgebbaren Soll-Ausgangsgröße charakterisiert, und

   wobei die die Kostenfunktion charakterisierende Größe ferner wenigstens eine Bestrafungsgröße umfasst, wobei die Bestrafungsgröße eine Abweichung einer a-Posteriori-Verteilungsfunktion (24) eines der Gewichte von einer a-Priori-Verteilungsfunktion (20) der vorgebbaren diskreten Werte dieses Gewichtes, charakterisiert;

   - Anlernen (33) des tiefen neuronalen Netzes (10) derart, dass das tiefe neuronale Netz (10) abhängig von der Trainingseingangsgröße des tiefen neuronalen Netzes (10) ein Objekt detektiert,

   wobei beim Anlernen des tiefen neuronalen Netzes wenigstens ein Wert eines der Gewichte abhängig von der die Kostenfunktion charakterisierenden Größe angepasst wird; und

   - Abbilden der Werte der Gewichte auf jeweils einen in der vorgebbaren Liste enthaltenen diskreten Wert, wobei die Gewichte anhand eines Indexes des diskreten Werts aus der Liste abgespeichert (34) werden, wobei jeweils nur ein Index des Wertes

   des Gewichts und die vorgebbare Liste mit diskreten Werten und deren Indices abgespeichert werden.

2. Verfahren nach Anspruch 1, wobei die a-Priori-Verteilungsfunktion (24) für eine vorgebbare Untermenge der Gewichte des neuronalen Netzes (10) abhängig von einer Topologie eines mit dieser vorgebbaren Untermenge assoziierten Teils des tiefen neuronalen Netzes (10) gewählt wird.

3. Verfahren nach einem der Ansprüche 1 oder 2, wobei die Bestrafungsfunktion eine gewichtete Aufsummierung von ermittelten Abweichungen charakterisiert, wobei jeweils eine Abweichung der a-Posteriori-Verteilungsfunktion (24) eines der Gewichte zu der a-Priori-Verteilungsfunktion (20) an jeweils einer Position, die jeweils einem der vorgebbaren diskreten Werte zugeordnet ist, ermittelt wird und diese ermittelte Abweichung anhand einer Gewichtungsfunktion gewichtet wird, die diesem jeweiligen vorgebbaren diskreten Wert zugeordnet ist.

4. Verfahren nach Anspruch 3, wobei die ermittelten Abweichungen jeweils eine ermittelte Abweichung der a-Posteriori-Verteilungsfunktion zu einer Log-Uniform-Verteilungsfunktion ist, wobei diese ermittelte Abweichung an jeweils eine der Positionen einer der zumindest zwei vorgebbaren diskreten Werten verschobenen wird und anhand der Gewichtungsfunktion, die diesem jeweiligen vorgebbaren diskreten Wert zugeordnet ist, gewichtet wird.

5. Verfahren nach einem der Ansprüche 3 oder 4, wobei eine der ermittelten Abweichungen anhand von einem vorgebbaren Wert abzüglich der Summe der jeweiligen Gewichtungsfunktionen gewichtet wird.

6. Verfahren nach einem der vorhergehenden Ansprüche, wobei die Abweichung der a-Posteriori-Verteilungsfunktion von der a-Priori-Verteilungsfunktion anhand von einer Approximation einer Kullback-Leibler Divergenz zwischen der a-Posteriori-Verteilungsfunktion und der a-Priori-Verteilungsfunktion, ermittelt wird.

7. Verfahren nach einem der vorhergehenden Ansprüche, wobei beim Anlernen des tiefen neuronalen Netzes die a-Posteriori-Verteilungsfunktion eines der Gewichte abhängig von der Kostenfunktion angepasst wird, wobei das Gewicht, welches durch die angepasste a-Posteriori-Verteilungsfunktion charakterisiert wird, abhängig von der angepassten a-Posteriori-Verteilungsfunktion angepasst wird.

8. Verfahren nach einem der vorherigen Ansprüche, wobei einer der zumindest zwei der vorgebbaren diskreten Werte der Wert "0" ist.

9. Verfahren nach einem der vorherigen Ansprüche, wobei nach dem Anlernen des tiefen neuronalen Netzes (10), eine Eingangsgröße des tiefen neuronalen Netzes (10) ermittelt wird; ein Objekt mittels des angelernten tiefen neuronalen Netzes (10) abhängig von der ermittelten Eingangsgröße detektiert wird.

10. Verfahren nach Anspruch 9, wobei eine zumindest teilautonome Maschine abhängig von dem detektierten Objekt angesteuert wird.

11. Computerprogramm, welches Befehle umfasst, die beim Ausführen des Computerprogramms durch einen Computer diesen veranlassen, die Schritte des Verfahrens nach einem der Ansprüche 1 bis 10 auszuführen.

12. Computerlesbares Speichermedium (17), auf dem das Computerprogramm nach Anspruch 11 gespeichert ist.

13. Vorrichtung zur Datenverarbeitung umfassend Mittel zur Ausführung des Verfahrens nach einem der Ansprüche 1 bis 10.

**Claims**

1. Computer-implemented method (30) for creating a deep neural network (10),

   wherein the deep neural network (10) has a plurality of layers (12) and connections (13) with weights, and the weights in the created deep neural network can assume only predefinable discrete values from a predefinable list of discrete values, comprising the following steps:

   - providing (31) at least one training input variable for the deep neural network (10);
   - determining (32) a variable characterizing a cost function, wherein the variable characterizing the cost function comprises a first variable, which characterizes a deviation of an output variable of the deep neural network, the output variable being determined depending on the provided training input variable, relative to a predefinable target output variable, and

   wherein the variable characterizing the cost function furthermore comprises at least one penalty variable, wherein the penalty variable characterizes a deviation of an a-posteriori distribution function (24) of one of the weights from an a-priori distribution function (20) of the predefinable discrete values of this weight;

   - training (33) the deep neural network (10) in such a way that the deep neural network (10) detects an object depending on the training input variable of the deep neural network (10),

   wherein during the training of the deep neural network at least one value of one of the weights is adapted depending on the variable characterizing the cost function; and

   - mapping the values of the weights onto in each case a discrete value contained in the predefinable list, wherein the weights are stored (34) on the basis of an index of the discrete value from the list, wherein in each case only an index of the value of the weight and the predefinable list with discrete values and the indices thereof are stored.

2. Method according to Claim 1, wherein the a-priori distribution function (24) for a predefinable subset of the weights of the neural network (10) is chosen depending on a topology of a part of the deep neural network (10) that is associated with this predefinable subset.

3. Method according to either of Claims 1 and 2, wherein the penalty function characterizes a weighted summation of determined deviations, wherein a respective deviation of the a-posteriori distribution function (24) of one of the weights relative to the a-priori distribution function (20) is determined at a respective position assigned in each case to one of the predefinable discrete values, and this determined deviation is weighted on the basis of a weighting function assigned to this respective predefinable discrete value.

4. Method according to Claim 3, wherein the determined deviations are in each case a determined deviation of the a-posteriori distribution function relative to a log-uniform distribution function, wherein this determined deviation is shifted to in each case one of the positions of one of the at least two predefinable discrete values and is weighted on the basis of the weighting function assigned to this respective predefinable discrete value.

5. Method according to either of Claims 3 and 4, wherein one of the determined deviations is weighted on the basis of a predefinable value minus the sum of the respective weighting functions.

6. Method according to any of the preceding claims, wherein the deviation of the a-posteriori distribution function from the a-priori distribution function is determined on the basis of an approximation of a Kullback-Leibler divergence between the a-posteriori distribution function and the a-priori distribution function.

7. Method according to any of the preceding claims, wherein during the training of the deep neural network the a-posteriori distribution function of one of the weights is adapted depending on the cost function, wherein the weight **characterized by** the adapted a-posteriori distribution function is adapted depending on the adapted a-posteriori distribution function.

8. Method according to any of the preceding claims, wherein one of the at least two of the predefinable discrete values is the value "0".

9. Method according to any of the preceding claims, wherein after the training of the deep neural network (10), an input variable of the deep neural network (10) is determined; an object is detected by means of the trained deep neural network (10) depending on the determined input variable.

10. Method according to Claim 9, wherein an at least partially autonomous machine is controlled depending on the detected object.

11. Computer program comprising instructions which, when the computer program is executed by a computer, cause said computer to carry out the steps of the method according to any of Claims 1 to 10.

12. Computer-readable storage medium (17) on which the computer program according to Claim 11 is stored.

13. Device for data processing comprising means for carrying out the method according to any of Claims 1 to 10.

**Revendications**

1. Procédé mis en œuvre par ordinateur (30) pour créer un réseau neuronal profond (10),

dans lequel le réseau neuronal profond (10) présente une pluralité de couches (12) et de connexions (13) avec des pondérations, et les pondérations dans le réseau neuronal profond créé ne peuvent prendre que des valeurs discrètes prédéfinissables provenant d'une liste prédéfinissable de valeurs discrètes, comprenant les étapes consistant à :

- fournir (31) au moins une grandeur d'entrée d'entraînement pour le réseau neuronal profond (10) ;
- établir (32) une grandeur caractérisant une fonction de coût, la grandeur caractérisant la fonction de coût comprenant une première grandeur qui caractérise un écart d'une grandeur de sortie, établie en fonction de la grandeur d'entrée d'entraînement fournie, du réseau neuronal par rapport à une grandeur de sortie de consigne, et

dans lequel la grandeur caractérisant la fonction de coût comprend en outre au moins une grandeur de pénalité, dans lequel la grandeur de pénalité caractérise un écart d'une fonction de distribution a posteriori (24) d'une des pondérations par rapport à une fonction de distribution a priori (20) des valeurs discrètes prédéfinissables de cette pondération ;

- former (33) le réseau neuronal profond (10) de telle sorte que le réseau neuronal profond (10) détecte un objet en fonction de la grandeur d'entrée d'entraînement du réseau neuronal profond (10),

dans lequel, lors de la formation du réseau neuronal profond, au moins une valeur d'une des pondérations est adaptée en fonction de la grandeur caractérisant la fonction de coût ; et

- mapper les valeurs des pondérations sur respectivement une valeur discrète contenue dans la liste prédéfinissable, dans lequel les pondérations sont mémorisées (34) à l'aide d'un indice de la valeur discrète provenant de la liste, dans lequel ne sont mémorisés respectivement qu'un indice de la valeur de la pondération et la liste prédéfinissable de valeurs discrètes et leurs indices.

2.  Procédé selon la revendication 1, dans lequel la fonction de distribution a priori (24) est choisie pour un sous-ensemble prédéfinissable des pondérations du réseau neuronal (10) en fonction d'une topologie d'une partie, associée à ce sous-ensemble prédéfinissable, du réseau neuronal profond (10).

3.  Procédé selon l'une quelconque des revendications 1 ou 2, dans lequel la fonction de pénalité caractérise une totalisation pondérée des écarts établis, dans lequel respectivement un écart de la fonction de distribution a posteriori (24) d'une des pondérations par rapport à la fonction de distribution a priori (20) est établi respectivement dans une position respectivement qui est associée respectivement à l'une des valeurs discrètes prédéfinissables, et cet écart établi est pondéré à l'aide d'une fonction de pondération qui est associée à cette valeur discrète prédéfinissable respective.

4.  Procédé selon la revendication 3, dans lequel les écarts établis correspondent respectivement à un écart établi de la fonction de distribution a posteriori par rapport à une fonction de distribution log-uniforme, dans lequel cet écart établi est décalé vers respectivement l'une des positions d'une desdites au moins deux valeurs discrètes prédéfinissables, et est pondéré à l'aide de la fonction de pondération qui est associée à cette valeur discrète prédéfinissable respective.

5.  Procédé selon l'une quelconque des revendications 3 ou 4, dans lequel l'un des écarts établis est pondéré à l'aide d'une valeur prédéfinissable moins la somme des fonctions de pondération respectives.

6.  Procédé selon l'une quelconque des revendications précédentes, dans lequel l'écart de la fonction de distribution a posteriori par rapport à la fonction de distribution a priori est établi à l'aide d'une approximation d'une divergence de Kullback-Leibler entre la fonction de distribution a posteriori et la fonction de distribution a priori.

7.  Procédé selon l'une quelconque des revendications précédentes, dans lequel, lors de la formation du réseau neuronal profond, la fonction de distribution a posteriori d'une des pondérations est adaptée en fonction de la fonction de coût, dans lequel la pondération, qui est **caractérisée par** la fonction de distribution a posteriori adaptée, est adaptée en fonction de la fonction de distribution a posteriori adaptée.

8.  Procédé selon l'une quelconque des revendications précédentes, dans lequel l'une des au moins deux valeurs discrètes prédéfinissables est la valeur « 0 ».

9.  Procédé selon l'une quelconque des revendications précédentes, dans lequel, après la formation du réseau neuronal profond (10), une grandeur d'entrée du réseau neuronal profond (10) est établie ; un objet étant détecté au moyen du réseau neuronal profond formé (10), en fonction de la grandeur d'entrée établie.

**10.** Procédé selon la revendication 9, dans lequel une machine au moins semi-autonome est pilotée en fonction de l'objet détecté.

**11.** Programme informatique comprenant des instructions qui, lorsque le programme informatique est exécuté par un ordinateur, font que celui-ci exécute les étapes du procédé selon l'une quelconque des revendications 1 à 10.

**12.** Support de stockage lisible par ordinateur (17), sur lequel est mémorisé le programme informatique selon la revendication 11.

**13.** Dispositif de traitement de données, comprenant des moyens pour exécuter le procédé selon l'une quelconque des revendications 1 à 10.

**Fig. 1**

**Fig. 2A**

**Fig. 2B**

30

```
┌─────────────────────────────┐
│             31              │
└─────────────────────────────┘
               │
               ▼
┌─────────────────────────────┐
│             32              │
└─────────────────────────────┘
               │
               ▼
┌─────────────────────────────┐
│             33              │
└─────────────────────────────┘
               │
               ▼
┌─────────────────────────────┐
│             34              │
└─────────────────────────────┘
```

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5119469 A

**In der Beschreibung aufgeführte Nicht-Patentliteratur**

- Model compression as constrained optimization, with application to neural nets. Part II: quantization. **MIGUELA CARREIRA-PERPINAN et al.** ARXIV.ORG. CORNELL UNIVERSITY LIBRARY, 201 OLIN LIBRARY CORNELL UNIVERSITY ITHACA, 13. Juli 2017